# EUROPÄISCHE PATENTSCHRIFT

(11) **EP 2 809 766 B1**
(45) Veröffentlichungstag und Bekanntmachung des Hinweises auf die Patenterteilung: **23.03.2016**
(21) Anmeldenummer: 13792614.3
(22) Anmeldetag: 06.11.2013
(51) Int. Cl.: C12C 7/06, C12C 7/22, F28D 20/00, F28D 21/00

(54) **WÄRMEZUFUHR ZU EINER VERARBEITUNGSEINRICHTUNG IN EINER ANLAGE ZUR BIERHERSTELLUNG**
SUPPLYING OF HEAT TO A PROCESSING DEVICE IN A PLANT FOR PRODUCING BEER
APPORT DE CHALEUR À UN DISPOSITIF DE TRAITEMENT D'UNE INSTALLATION DE PRODUCTION DE BIÈRE

(30) Priorität: 12.11.2012 DE 102012220581
(43) Veröffentlichungstag der Anmeldung: 10.12.2014
(73) Patentinhaber: Krones AG, 93073 Neutraubling (DE)
(72) Erfinder: KAMMERLOHER, Helmut, 93073 Neutraubling (DE)
(74) Vertreter: Grünecker Patent- und Rechtsanwälte PartG mbB
(86) Internationale Anmeldenummer: PCT/EP2013/073139
(87) Internationale Veröffentlichungsnummer: WO 2014/072329

(56) Entgegenhaltungen:
- WO-A1-00/27992
- WO-A1-2011/076410
- WO-A1-2012/045395
- DE-A1-102006 037 368
- DE-A1-102010 042 765

## Beschreibung

### Gebiet der Erfindung

Die vorliegende Erfindung betrifft das Zuführen von Wärme in Form eines Wärmeträgermediums (insbesondere Warm- oder Heißwassers) zu Verarbeitungseinrichtungen in einer Anlage zur Bierherstellung, insbesondere im Sudhaus, und insbesondere das Aufheizen bzw. Heißhalten von Maische und/oder Würze.

### Stand der Technik

Im Sudhaus sind die Prozesse des Maischens und des Würzekochens bzw. Würzeheiß-haltens energetisch sehr aufwändig. Daher ist es erforderlich, den Energiehaushalt dieser Prozesse möglichst genau zu steuern und möglichst rekuperative Energie, die von Wärmerückgewinnungseinrichtungen, wie beispielsweise einem Würzekühler, einem Pfannendunstkondensator oder einem Kondensatkühler, stammt, zu verwenden.

Im Stand der Technik (WO 2012 045 395 A1) ist es bekannt, ein Wärmeträgermedium (meist in Form von Wasser) aus einem Energiespeichertank, das in einem Wärmetauscher mithilfe von Hochdruckheißwasser oder Dampf erhitzt wird, einer Maischevorrichtung zuzuführen. Im Energiespeichertank wird rekuperativ gewonnene Energie in Form der Wärme des gespeicherten Wassers als Wärmeträgermedium zwischengespeichert und für den Maischevorgang bereitgestellt. Nach Abgabe der Wärme an die Maischevorrichtung wird das Wärmeträgermedium wieder dem Energiespeichertank mit einer Temperatur von etwa 75 °C, jedenfalls von weniger als 80 °C, zugeführt. Bei einer vorherigen zusätzlichen Erhitzung des Wärmeträgermediums in einem Wärmetauscher und/oder sehr hohen Heizraten kann die Rücklauftemperatur des Wärmeträgermediums in den Energiespeichertank auch über 80°C ansteigen und Temperaturen bis 90°C erreichen, außerdem sinkt dadurch der rekuperative Energieanteil im System.

Angesichts des beschriebenen Stands der Technik liegt der vorliegenden Erfindung die Aufgabe zugrunde, eine energetisch günstigere Zufuhr von Wärme zu einer Verarbeitungseinrichtung, insbesondere im Sudhaus, wie einer Maischeinrichtung oder einer Einrichtung zum Würzekochen oder Würzeheißhalten, bereitzustellen.

### Beschreibung der Erfindung

Die oben genannte Aufgabe wird durch ein Verfahren zur mehrstufigen Wärmezufuhr zu zumindest einer Verarbeitungseinrichtung in einer Anlage zur Bierherstellung, insbesondere in einem Sudhaus, gelöst, das die Schritte umfasst:
Speichern von einem Wärmeträgermedium in einem Energiespeichertank, das vor dem Speichern durch eine Wärmerückgewinnungseinrichtung (rekuperative Wärmequelle) erhitzt wird;
in einer ersten Phase Zuführen von Wärme zu der zumindest einen Verarbeitungseinrichtung hauptsächlich durch Zufuhr des Wärmeträgermediums aus dem Energiespeichertank zu der zumindest einen Verarbeitungseinrichtung; und nachfolgend
in einer zweiten Phase Zuführen einer zeitlich anwachsenden Wärmemenge von Wärme nicht-rekuperativen Ursprungs zu dem der zumindest einen Verarbeitungseinrichtung zugeführten Wärmeträgermedium und somit zu der zumindest einen Verarbeitungseinrichtung.

Beispielsweise innerhalb eines Brauprozesses rückgewonnene Energie (Wärme) wird so zum Erhitzen des im Energiespeichertank gespeicherten Wärmeträgermediums verwendet. Das Wärmeträgermedium kann insbesondere Warmwasser sein. Der Begriff Warmwasser umfasst hier auch Heißwasser. Außerdem kann auch Thermoöl als Wärmeträgermedium verwendet werden. Die Wärmerückgewinnungseinrichtung kann beispielsweise ein Pfannendunstkondensator, in dem Brüden, die in einer Würzekocheinrichtung oder Würzeheißhaltungseinrichtung entstehen, niedergeschlagen werden, ein Kondensatkühler und/oder ein Würzekühler, der Würze nach Durchlaufen einer Heißtrubabscheidung kühlt, sein.

Die Wärme nicht-rekuperativen Ursprungs stammt nicht von einer Wärmerückgewinnungseinrichtung der Anlage zur Bierherstellung (insbesondere nicht von einem Würzekühler oder Pfannendunstkondensator). Wie der Begriff "nicht-rekuperativ" hier verwendet wird, wird die Wärme nicht-rekuperativen Ursprungs durch Verbrennen, Vergasen, Pyrolyse oder Katalyse bzw. Elektrolyse eines Brennstoffs oder durch Solarthermie oder Geothermie gewonnen. Sie stellt also eine beispielsweise aus Primärenergie gewonnene, verglichen mit der rekuperativ gewonnenen Wärme "höherwertige" Energieform dar.

Die Verarbeitungseinrichtung ist eine Einrichtung, in der ein Prozess innerhalb eines Brauverfahrens unter Zufuhr von Wärme ausgeführt wird. Die Verarbeitungseinrichtung kann eine Einrichtung zum Kochen oder Heißhalten von Würze, beispielsweise eine Würzepfanne, oder eine Maischeinrichtung, beispielsweise ein Maischgefäß, etwa ein Maischebottich oder eine Maischepfanne, sein.

Erfindungsgemäß erfolgt in der ersten Phase die Zufuhr von Wärme zu der zumindest einen Verarbeitungseinrichtung hauptsächlich durch Zufuhr des Wärmeträgermediums aus dem Energiespeichertank. In der ersten Phase kann die Zufuhr von Wärme zu der zumindest einen Verarbeitungseinrichtung ausschließlich durch Zufuhr des Wärmeträgermediums aus dem Energiespeichertank erfolgen. Es ist jedoch nicht ausgeschlossen, dass in der ersten Phase auch anderweitig Wärme der Verarbeitungseinrichtung zugeführt wird; die Wärmemenge der insgesamt in der ersten Phase der Verarbeitungseinrichtung nicht mithilfe des Wärmeträgermediums aus dem Energiespeichertank zugeführten Wärme ist jedoch geringer als die Wärmemenge der Wärme, die durch das Wärmeträgermedium aus dem Energiespeichertank der Verarbeitungseinrichtung zugeführt wird.

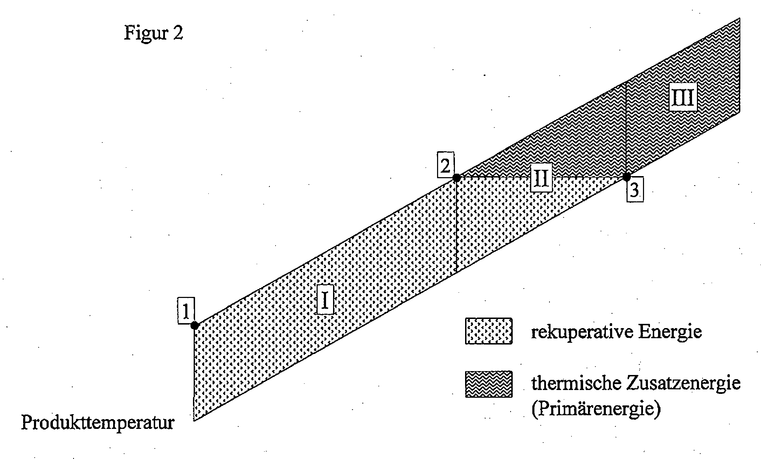

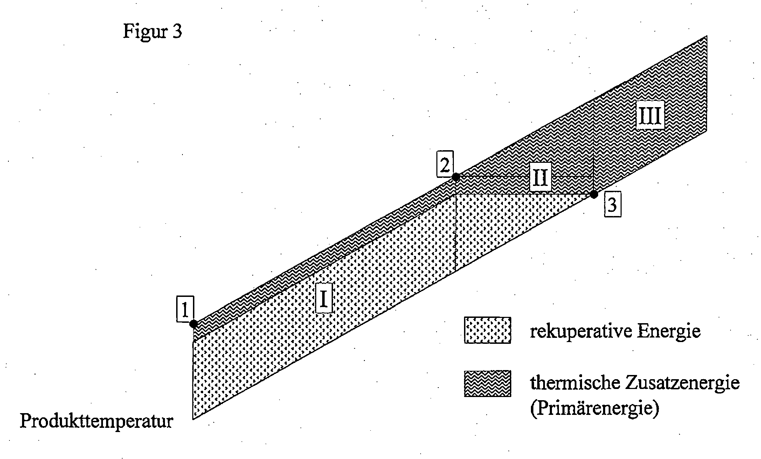

In der zweiten Phase wird erfindungsgemäß Wärme von einer anderen, nicht-rekuperativen Wärmequelle der Verarbeitungseinrichtung zugeführt, wobei zumindest über eine bestimmte Zeitdauer der zweiten Phase weiterhin Wärme über das Wärmeträgermedium aus dem Energiespeichertank der Verarbeitungseinrichtung zugeführt wird. Innerhalb der zweiten Phase nimmt der Anteil der der Verarbeitungseinrichtung von der nicht-rekuperativen Wärmequelle zugeführten Wärme im Laufe der Zeit zu. Die Zunahme muss weder kontinuierlich noch stetig erfolgen, jedoch kann, wenn gewünscht, eine derartige Zunahme eingestellt werden (siehe auch detaillierte Beschreibung insbesondere der Figuren 2 und 3 unten).

Es wird im Allgemeinen soviel wie möglich der im Wärmeträgermedium gespeicherten, von der Wärmerückgewinnungseinrichtung stammenden Wärme der Verarbeitungseinrichtung zugeführt. Im Vergleich zum Stand der Technik kann somit mehr rekuperative Wärme in das System rückgekoppelt werden. Insbesondere kann die an der Verarbeitungseinrichtung bereitgestellte Heizrate bzw. der Wärmestrom in ein in der Verarbeitungseinrichtung zu erhitzendes Produkt ungefähr konstant gehalten werden. Eine ungefähr konstant gehaltene Heizrate ist hierbei eine Heizrate, die eine Schwankung von maximal plus/minus 0,5 K/min, insbesondere 0,3 K/min, aufweist. In der ersten Phase gelingt das hauptsächlich mithilfe des Wärmeträgers aus dem Energiespeichertank. Nach einer gewissen Zeit reicht jedoch die Heizmittelvorlauftemperatur für eine gleichbleibend hohe treibende Kraft nicht mehr aus, um die Heizrate konstant zu halten. Daher wird in der zweiten auf die erste folgenden Phase zunehmend Wärme aus einer nichtrekuperativen, meist fossil befeuerten Wärmequelle dem rekuperativen Wärmeträgermedium aufaddiert, um so die Vorlauftemperatur zu erhöhen und die Heizrate weiter konstant zu halten.

Gemäß einer Weiterbildung wird in einer nachfolgenden dritten Phase hauptsächlich nicht-rekuperativ gewonnene Wärme zu der zumindest einen Verarbeitungseinrichtung zugeführt, d.h. die der Verarbeitungseinrichtung zugeführte Wärmemenge der Wärme nicht-rekuperativen Ursprungs ist größer als die vom Wärmeträgermedium aus dem Energiespeichertank der Verarbeitungseinrichtung zugeführten Wärmemenge. Hierbei kann es sich ergeben, dass in der dritten Phase und/oder bereits am Ende der zweiten Phase keine Wärme mehr von dem Wärmeträgermedium des Energiespeichertanks der Verarbeitungseinrichtung zugeführt wird. Insbesondere kann die Heizrate in der ersten und/oder zweiten und/oder dritten Phase durch Regeln bzw. Steuern der Wärmezufuhr von der nicht-rekuperativen Wärmequelle konstant gehalten werden.

Die von der nicht-rekuperativen Wärmequelle stammende Wärme kann dem Wärmeträgermedium aus dem Energiespeichertank mithilfe eines Wärmetauschers zugeführt werden. Der Wärmetauscher kann in Form eines Gegenstromwärmetauschers, Gleichstrom- oder Kreuzstromwärmetauschers vorgesehen sein.

Bei einem Gegenstromwärmetauscher sind höhere Wärmeströme gegenüber anderen Wärmetauscherprinzipien wie zum Beispiel einem Kreuz- oder Gleichstromwärmetauscher zu erreichen. Das wärmere (wärmeabgebende) Fluid überträgt daher beim Gegenstromwärmetauscher einen größeren Anteil seiner Wärmemenge auf das kältere (wärmeaufnehmende) Fluid als beispielsweise beim Gleichstromwärmetauscher. So hat der Gegenstromwärmetauscher die Eigenschaft, dass die Austrittstemperatur des zu beheizenden Produkts, also die Temperatur des Produkts im Bereich der Spiegeloberfläche, über der Austrittstemperatur des Heizmediums im oben beschriebenen Heizmedienablauf liegen kann.

Der Energieverlust beim Gegenstromwärmetauscher ist daher deutlich niedriger als im Falle anderer Wärmetauscherprinzipien. Als Folge dessen kann die Temperatur des Heizmediums herabgesetzt werden, was zu einer besonders schonenden Erwärmung des Produkts führt, wodurch die Produktqualität positiv beeinflusst werden kann.

Gemäß einer Weiterbildung kann folgendes realisiert sein: Das Heizmedium wird zumindest abschnittsweise derart in der Heizung geführt, dass es entgegen einer an der Heizfläche erzeugten Grundströmung innerhalb des Produkts, insbesondere von oben nach unten fließt. Die Grundströmung innerhalb des Produkts wird insbesondere durch ein Rührwerk erzeugt. Durch das Vorsehen eines Rührwerks ergibt sich z. B. folgende Bewegung des Produkts. Durch den vom Rührer bedingten Auftrieb und durch den thermischen Auftrieb strebt das Produkt an der Heizfläche oder aber im Fall einer Zargenheizung, an der Innenfläche der Behälterwandung in der Grundströmung von unten nach oben. Die meisten Teilchen wandern an der Heizfläche dabei spiralförmig von einem unteren Flüssigkeitsbereich in den oberen Flüssigkeitsbereich. Vorteilhafterweise ist der Zulauf für das Heizmedium als durchgehende oder in Abschnitte unterteilte Ringleitung ausgebildet und hat mehrere oder eine durchgehende Öffnung, durch die das Heizmedium in die Heizung fließt. Auch der mindestens eine Ablauf kann entsprechend als durchgehende und/oder in Abschnitte unterteilte Ringleitung ausgebildet sein. Dadurch, dass der Zulauf sich in einem oberen Flüssigkeitsbereich ringförmig um die Heizung bzw. Heizfläche erstreckt und sich der Ablauf wie oben beschrieben, unterhalb des Zulaufes befindet, ist eine gleichmäßige Durchströmung um den Umfang der Heizung von oben nach unten gegeben. Somit wird das Heizmedium im Gegenstrom zur Produktgrundströmung geführt und man erreicht auch mit relativ niedrigen Temperaturdifferenzen zwischen Heizmedium und zu erhitzendem Produkt sehr hohe Wärmeströme.

Der Wärmetauscher kann ein Rohrbündelwärmetauscher oder ein Plattenwärmetauscher sein. Als Heizmedium zum Aufheizen des von dem Energiespeichertank stammenden Wärmeträgermediums kann beispielsweise Heißwasserdampf oder Hochdruckheißwasser dienen, in das Wärme über eine nicht-rekuperativen Wärmequelle eingetragen wurde. Im Wärmetauscher wird ein Teil der eingetragenen Wärme an das Wärmeträgermedium abgegeben, das diese Wärme der Verarbeitungseinrichtung zuführt. Das nicht-rekuperative Heizmedium hat im Allgemeinen eine Temperatur, die größer als die größte im Energiespeichertank vorkommende Temperatur ist.

In den oben beschriebenen Beispielen kann durch die der Verarbeitungseinrichtung zugeführte Wärme eine Aufheizung eines Produkts in der Verarbeitungseinrichtung auf über 74 °C, insbesondere über 78 °C, insbesondere über 85 °C, erfolgen. Insbesondere kann Roh- oder Kochmaische in einer Maischeinrichtung als Verarbeitungseinrichtung auf solche relativ hohen Temperaturen erhitzt und bei solchen Temperaturen gekocht oder heiß gehalten werden.

In den oben beschriebenen Beispielen kann die der Verarbeitungseinrichtung zugeführte Wärme über eine Kontaktfläche mit Unebenheiten an einer mit dem Produkt im Kontakt stehenden Fläche, insbesondere über ein Pillow Plate, zugeführt werden. Die mit Unebenheiten versehene Kontaktfläche besitzt einen höheren Wärmeübergangskoeffizienten und damit auch einen höheren Wärmedurchgangskoeffizienten (k-Wert) als ebene Flächen. Eine derartige mit, beispielsweise wellenförmigen, blasenförmigen und/oder wölbungsförmigen, Unebenheiten versehene Kontaktfläche, in der das Wärmeträgermedium, vorzugsweise durch einen regel- oder unregelmäßigen Versatz von Störstellen, zur Turbulenzerhöhung im Pillow Plate strömt (z.B den Schweißnähten der Pillow Plate erzeugenden Verbindungen), und somit dem effizienten Wärmeeintrag in das Produkt dient, kann insbesondere auch dazu dienen, einen konstanten Wärmestrom in ein in der Verarbeitungseinrichtung zu erhitzendes Produkt zu erhalten. Vorteilhafterweise kann eine derart gestaltete Kontaktfläche in einer Maischeinrichtung beispielsweise in einem Maischgefäß, etwa einem Maischebottich oder einer Maischepfanne, Verwendung finden. Insbesondere kann ein solches Maischgefäß solche Kontaktflächen mit Unebenheiten als Heizeinrichtungen auch nur an der Zarge aufweisen, ohne dass eine zusätzliche Bodenheizung vorgesehen sein muss. In jedem Fall reduziert sich durch die niedrigen Grenzschichttemperaturen und auch eine relativ hohe produktseitige Turbulenz das Fouling erheblich.

In der ersten und der zweiten Phase kann ein Teil des Wärmeträgermediums, nachdem es Wärme an die Verarbeitungseinrichtung, beispielsweise durch Durchströmen eines Pillow Plates, abgegeben hat, direkt durch die Wärme nicht-rekuperativen Ursprungs erhitzt und der Verarbeitungseinrichtung erneut zugeführt werden, ohne dass dieser Teil wieder in den Energiespeichertank gefördert wird. Insbesondere kann dieser Teil die Wärme nicht-rekuperativen Ursprungs in dem oben genannten Wärmetauscher aufnehmen. Dieser Teil wird also in diesem Fall in einen Kreislauf geführt, der sich lediglich über den Wärmetauscher und die Verarbeitungseinrichtung, nicht aber den Energiespeichertank erstreckt. Alternativ kann dieser Teil ohne weiteres Erhitzen mit dem vom Energiespeichertank stammenden Wärmeträgermedium gemischt und dann der Verarbeitungseinrichtung zugeführt werden. Ein gleichmäßiger Volumenstrom durch die Verarbeitungseinrichtung kann unter Verwendung entsprechender Ventile genau eingestellt werden (siehe auch Beschreibung unten).

In der dritten Phase kann das Wärmeträgermedium zumindest größtenteils, nachdem es Wärme an die Verarbeitungseinrichtung abgegeben hat, direkt durch die Wärme nicht-rekuperativen Ursprungs erhitzt werden und der Verarbeitungseinrichtung zugeführt werden, ohne dass es wieder in den Energiespeichertank gefördert wird. Das ist insbesondere vorteilhaft, wenn das von der Verarbeitungseinrichtung nach der Wärmeabgabe zurückgeführte Wärmeträgermedium eine annähernd gleiche Temperatur wie, oder eine höhere Temperatur als, die höchste im Energiespeichertank vorliegende Wärmeträgermediumstemperatur aufweist.

Im Verlauf des in den obigen Beispielen beschriebenen Verfahrens zur mehrstufigen Wärmezufuhr zu zumindest einer Verarbeitungseinrichtung in einem Sudhaus wird das Wärmeträgermedium, nachdem es Wärme an die Verarbeitungseinrichtung abgegeben hat, mit verschiedenen Temperaturen wieder dem Energiespeichertank zugeführt. Beispielsweise wird relativ heißes Wärmeträgermedium (beispielsweise mit etwa 95 °C bis 98° C) aus dem oberen Bereich des Energiespeichertanks abgezogen und der Verarbeitungseinrichtung zugeführt, um dort die Wärmeenergie abzugeben. Das dann abgekühlte Wärmeträgermedium (mit beispielsweise etwa 75 °C bis 85 °C) wird anschließend unten wieder im Energiespeichertank eingelagert. Große Mischzonen sollen im Energiespeichertank vermieden werden, um die natürliche Schichtung nicht zu zerstören. Deshalb kann vorgesehen werden, dass das in den Energiespeichertank nach Wärmeabgabe an die Verarbeitungseinrichtung zurückgeführte Wärmeträgermedium temperaturabhängig (dichteabhängig) auf unterschiedlichen Höhen in den Energiespeichertank eingelagert wird, ohne größere Durchmischungen zu erzeugen, wodurch eine weitere Optimierung des gesamten Energiehaushaltes des Verfahrens erreicht wird. Die Einschichtung kann mithilfe einer Schichtladelanze erfolgen.

Wie bereits erwähnt, wird der Energiespeichertank mit einem Wärmeträgermedium, beispielsweise Warm- bzw. Heißwasser beliefert, das mithilfe einer Wärmerückgewinnungseinrichtung, beispielsweise einem Pfannendunstkondensator und/oder einem Würzekühler, erhitzt wurde. Gemäß einer Weiterbildung wird der Wärmerückgewinnungseinrichtung relativ kaltes Wärmeträgermedium von dem Energiespeichertank und von der Wärmerückgewinnungseinrichtung relativ heißes Wärmeträgermedium dem Energiespeichertank zugeführt. Die Temperatur in der Vorlaufleitung von dem Energiespeichertank zu der Wärmerückgewinnungseinrichtung kann beispielsweise durch Mischen von einem Wärmeträgermedium des Energiespeichertanks unterschiedlicher Temperatur (das aus unterschiedlichen Bereichen des Energiespeichertanks stammt) geregelt bzw. gesteuert werden.

Im erfindungsgemäßen Verfahren wird zumindest in der ersten Phase und zumindest teilweise in der zweiten Phase zumindest ein Teil des Wärmeträgermediums nach Wärmeabgabe an die Verarbeitungseinrichtung in den Energiespeichertank zurückgeführt. Im Verlaufe der Zeit bis zur dritten Phase weist dieser zurückgeführte Teil des Wärmeträgermediums immer höhere Temperaturen auf, so dass der Energiespeichertank mit Energie (Wärme) effektiv beladen werden würde; mit anderen Worten bedeutet dies, dass der gesamte Inhalt des Energiespeichertanks immer mehr aufgeheizt wird. Somit kann es erforderlich werden, dem Wärmeträgermedium des Energiespeichertanks wieder Wärme zu entziehen, um die Wärmeschaukel (Energieschaukel) mit der Wärmerückgewinnungseinrichtung aufrechterhalten zu können. Somit kann vorgesehen werden, das Wärmeträgermedium aus dem Energiespeichertank vor dem Zuführen zu der Wärmerückgewinnungseinrichtung mithilfe eines (zweiten) Wärmetauschers zu kühlen. Als Kühlmittel in diesem (zweiten) Wärmetauscher kann kaltes Brauwasser dienen. Dieses kalte Brauwasser wird in dem Wärmetauscher erhitzt und kann als Warmwasser beispielhaft im Sudhaus bereitgestellt werden. Dieser (zweite) Wärmetauscher kann sich in einer Umpumpleitung befinden, die in einer bestimmten Höhe am Energiespeichertank angeschlossen ist und somit ein gewisses Energiespeichervolumen abdeckt. Das in dem (zweiten) Wärmetauscher gekühlte Wärmeträgermedium kann nach dem Durchlaufen des Wärmetauschers wieder vollständig oder teilweise in den Energiespeichertank zurückgeleitet werden. Der (zweite) Wärmetauscher kann auch in dem Energiespeichertank integriert ausgebildet sein. In diesen beiden Fällen kann eine sehr gleichmäßige, nicht chargenabhängige kontinuierliche Wärmeabgabe an das den (zweiten) Wärmetauscher durchströmende Kühlmittel erreicht werden und somit der (zweite) Wärmetauscher relativ klein ausgebildet werden. Unter Charge wird beispielhaft der Prozessschritt Maischen oder Würzekühlen eines Sudes verstanden.

Das in dem (zweiten) Wärmetauscher gekühlte Wärmeträgermedium des Energiespeichertanks kann dann mit relativ kaltem (mit einer Temperatur unterhalb derjenigen des Wärmeträgermediums, das in dem (zweiten) Wärmetauscher gekühlt wird) und/oder warmem (mit einer Temperatur oberhalb derjenigen des Wärmeträgermediums, das in dem (zweiten) Wärmetauscher gekühlt wird) aus dem Energiespeichertank stammenden Wärmeträgermedium gemischt werden und dann der Wärmerückgewinnungseinrichtung zugeführt werden. Auch kann das so gemischte Wärmeträgermedium in einem zusätzlichen (dritten) Wärmetauscher weiter gekühlt werden, wenn es gewünscht ist. Es kann auch vorgesehen sein, dass lediglich ein Wärmetauscher zur Kühlung von gemischtem Wärmeträgermedium dient, wobei das gemischte Wärmeträgermedium aus dem Wärmeträgermedium des Energiespeichertanks mit relativ hoher Temperatur (aus dem oberen Bereich des Energiespeichertanks) und einem Wärmeträgermedium des Energiespeichertanks mit relativ niedriger Temperatur (aus dem unteren Bereich des Energiespeichertanks) stammt.

Durch Verwendung des zusätzlichen, zweiten und/oder dritten Wärmetauschers wird also in jedem Fall Energie (Wärme) des Wärmeträgermediums des Energiespeichertanks abgebaut. In der Wärmerückgewinnungseinrichtung kann das von dem Energiespeichertank stammende Wärmeträgermedium zur Kühlung eines Produkts Verwendung finden. So kann es zur Würzekühlung in einem Würzekühler verwendet werden. In der Wärmerückgewinnungseinrichtung wird dieses Wärmeträgermedium bei der Kühlung des Produkts in der Wärmerückgewinnungseinrichtung erhitzt und kann dann dem Energiespeichertank wieder zugeführt werden.

In dem Fall, in dem die Wärmerückgewinnungseinrichtung ein Würzekühler ist, kann es vorgesehen sein, dass die gesamte am Würzekühler durch Kühlung von Würze abgegebene Wärme und somit von dem Wärmeträgermedium aufgenommene Wärme in den Energiespeichertank transportiert wird. Somit ist in diesem Fall keine zusätzliche Stufe am Würzekühler zum Erzeugen von Warmwasser nötig. Es wird die gesamte am Würzekühler durch Kühlung der Würze anfallende Energie (Wärme) in den Energiespeichertank befördert.

Es wird weiterhin bereitgestellt ein Verfahren zur Regelung oder Steuerung des Energiehaushalts eines Energiespeichertanks in einer Anlage zur Bierherstellung, insbesondere in einem Sudhaus, mit den Schritten

Zuführen von einem Wärmeträgermedium mit einer ersten Temperatur von einer Wärmerückgewinnungseinrichtung zu dem Energiespeichertank;

Zuführen von einem Wärmeträgermedium aus dem Energiespeichertank zu einem Wärmetauscher und Kühlen des zugeführten Wärmeträgermediums in dem Wärmetauscher auf eine zweite Temperatur, die niedriger als die erste Temperatur ist; und

Zuführen des abgekühlten Wärmeträgermediums mit der zweiten Temperatur zurück in den Energiespeichertank und/oder zu der Wärmerückgewinnungseinrichtung. Es kann insbesondere das abgekühlte Wärmeträgermedium teilweise oder vollständig in den Energiespeichertank zurückgeleitet werden. Das dem Wärmetauscher aus dem Energiespeichertank zugeführte Wärmeträgermedium weist eine dritte Temperatur auf, die gleich der ersten Temperatur oder kleiner ist. Die Wärmerückgewinnungseinrichtung kann durch eines der oben genannten Beispiele gegeben sein.

Als Kühlmedium in diesem Wärmetauscher kann kaltes Brauwasser oder kaltes Prozesswasser dienen. Dieses kalte Brauwasser wird in dem Wärmetauscher erhitzt und kann als Warmwasser z.B. im Sudhaus bereitgestellt werden. Dieser Wärmetauscher kann sich in einer Umpumpleitung befinden, die in einer bestimmten Höhe am Energiespeichertank angeschlossen, ist und somit ein gewisses Energiespeichervolumen abdeckt. Der Wärmetauscher kann auch in dem Energiespeichertank integriert ausgebildet sein. In diesen beiden Fällen kann eine sehr gleichmäßige, nicht chargenabhängige, kontinuierliche Wärmeabgabe an das den Wärmetauscher durchströmende Kühlmedium erreicht werden und somit der Wärmetauscher relativ klein ausgebildet werden.

Das in dem Wärmetauscher gekühlte Wärmeträgermedium des Energiespeichertanks kann mit relativ kaltem (mit einer Temperatur unterhalb derjenigen des Wärmeträgermediums, das in dem Wärmetauscher gekühlt wird) und/oder warmem (mit einer Temperatur oberhalb derjenigen des Wärmeträgermediums, das in dem Wärmetauscher gekühlt wird) aus dem Energiespeichertank stammenden Wärmeträgermedium gemischt werden und dann mit einer, vorzugsweise vorbestimmten, Temperatur der Wärmerückgewinnungseinrichtung zugeführt werden. Auch kann das so gemischte Wasser in einem zusätzlichen Wärmetauscher weiter gekühlt werden, wenn es gewünscht ist. Es kann auch vorgesehen sein, dass lediglich ein Wärmetauscher zur Kühlung von gemischtem Wärmeträgermedium dient, wobei das gemischte Wärmeträgermedium aus Wärmeträgermedium des Energiespeichertanks mit relativ hoher Temperatur (aus dem oberen Bereich des Energiespeichertanks) und Wärmeträgermedium des Energiespeichertanks mit relativ niedriger Temperatur (aus dem unteren Bereich des Energiespeichertanks) stammt. Weiterhin ist es möglich, dass das in dem Wärmetauscher gekühlte Wärmeträgermedium wieder direkt in den Energiespeichertank zurückgeführt wird. Jeder der genannten Wärmetauscher kann mit kaltem Brauwasser betrieben werden.

Durch Verwendung eines der genannten oder der zwei Wärmetauscher wird also in jedem Fall Energie (Wärme) des Wärmeträgermediums des Energiespeichertanks abgebaut. In der Wärmerückgewinnungseinrichtung kann das von dem Energiespeichertank stammende Wärmeträgermedium zur Kühlung eines Produkts Verwendung finden. So kann es zur Würzekühlung in einem Würzekühler verwendet werden. In der Wärmerückgewinnungseinrichtung wird dieses Wärmeträgermedium bei der Kühlung des Produkts erhitzt, und es kann dann das erhitzte Wärmeträgermedium dem Energiespeichertank wieder zugeführt werden.

Das Verfahren zur Regelung oder Steuerung des Energiehaushalts eines Energiespeichertanks kann weiterhin die Schritte umfassen:
in einer ersten Phase Zuführen von Wärme zu zumindest einer Verarbeitungseinrichtung hauptsächlich durch Zufuhr des Wärmeträgermediums aus dem Energiespeichertank zu der zumindest einen Verarbeitungseinrichtung; und nachfolgend

in einer zweiten Phase Zuführen einer zeitlich anwachsenden Wärmemenge nicht-rekuperativen Ursprungs zu dem der zumindest einen Verarbeitungseinrichtung zugeführten Wärmeträgermedium und somit zu der zumindest einen Verarbeitungseinrichtung.

Von der Verarbeitungseinrichtung kann das Wärmeträgermedium zumindest teilweise in den Energiespeichertank zurückgeführt werden. Hierbei ist es gemäß einem Beispiel möglich, dass das von der Verarbeitungseinrichtung zumindest teilweise in den Energiespeichertank zurückgeführte Wärmeträgermedium vor Eintritt in diesen Energiespeichertank durch einen Wärmetauscher gekühlt wird, um ein Beladen des Energiespeichertanks mit Energie (Wärme) zu verringern/vermeiden. Der Wärmetauscher dieses Beispiels kann über eine weitere Vorlaufleitung mit dem Energiespeichertank verbunden sein und so auch einer kontinuierlichen Kühlung des Wärmeträgermediums des Energiespeichertanks dienen.

Die Verarbeitungseinrichtung kann eine gemäß den oben beschriebenen Beispielen sein. Das Verfahren zur Regelung oder Steuerung des Energiehaushalts eines Energiespeichertanks kann darüber hinaus sämtliche Schritte des oben beschriebenen Verfahrens zur mehrstufigen Wärmezufuhr zu zumindest einer Verarbeitungseinrichtung in einem Sudhaus aufweisen, wie sie oben beschrieben wurden. Insbesondere kann also die Verarbeitungseinrichtung eine Kontaktfläche mit Unebenheiten an einer mit dem zu erhitzenden Produkt im Kontakt stehenden Fläche und insbesondere ein Pillow Plate aufweisen. Wie oben beschrieben kann auch hier eine Schichtladelanze im Energiespeichertank zum temperaturabhängigen Einschichten des Wärmeträgermediums, das von der Verarbeitungseinrichtung zum Energiespeichertank geführt wird Verwendung finden, oder man kann das von der Verarbeitungseinrichtung rückgeführte Wärmeträgermedium auch in verschiedene Höhen des Energiespeichertanks direkt einlagern.

Insgesamt kann sowohl gemäß dem Verfahren zur mehrstufigen Wärmezufuhr zu zumindest einer Verarbeitungseinrichtung in einer Anlage zur Bierherstellung, insbesondere in einem Sudhaus, als auch gemäß dem Verfahren zur Regelung oder Steuerung des Energiehaushalts eines Energiespeichertanks gemäß einigen der beschriebenen Beispiele eine gesamte Wärmeschaukel von der Wärmerückgewinnungseinrichtung über den Energiespeichertank zu der Verarbeitungseinrichtung aufrechterhalten werden, die eine optimale Nutzung rekuperativ gewonnener Energie (Wärme) erlaubt.

Die oben genannte Aufgabe wird auch durch eine Anlage zur Bierherstellung gelöst, die die folgenden Elemente aufweist
einen Energiespeichertank zum Speichern von einem Wärmeträgermedium mit verschiedenen Temperaturen in verschiedenen Bereichen des Energiespeichertanks;
mindestens eine Verarbeitungseinrichtung; und
mindestens eine Wärmerückgewinnungseinrichtung;
wobei
ein erster Bereich des Energiespeichertanks über eine erste Vorlaufleitung mit einem ersten Wärmetauscher verbunden ist, der Wärmetauscher über eine zweite Vorlaufleitung mit der Verarbeitungseinrichtung verbunden ist, die Verarbeitungseinrichtung über eine erste Rücklaufleitung mit einem zweiten Bereich des Energiespeichertanks verbunden ist, der Energiespeichertank über eine Zuleitung mit der Wärmerückgewinnungseinrichtung verbunden ist und die Wärmerückgewinnungseinrichtung über eine Rückleitung mit dem Energiespeichertank verbunden ist.

Die Anlage kann weiterhin einen zweiten Wärmetauscher aufweisen, mit dem eine Wärmetauschervorlaufleitung verbunden ist, die mit einem dritten Bereich des Energiespeichertanks verbunden ist, in dem Wärmeträgermedium mit einer ersten Temperatur gespeichert ist. Der zweite Wärmetauscher weist eine Wärmetauscherrücklaufleitung auf, die mit einem vierten Bereich des Energiespeichertanks verbunden ist, in dem Wärmeträgermedium mit einer zweiten Temperatur, die kleiner als die erste Temperatur ist, gespeichert ist, wobei der zweite Wärmetauscher dazu ausgebildet ist, Wärmeträgermedium aus dem dritten Bereich des Energiespeichertanks zu kühlen. Das gekühlte Wärmeträgermedium kann zumindest teilweise dem vierten Bereich des Energiespeichertanks zugeführt werden. Die Anlage kann insbesondere noch eine Mischeinrichtung aufweisen, in der Wärmeträgermedium aus dem vierten Bereich der Energiespeichertanks und/oder dem zweiten Wärmetauscher und Wärmeträgermedium aus einem fünften Bereich des Energiespeichertanks angeschlossen ist, in dem Wärmeträgermedium mit einer dritten Temperatur oberhalb der ersten Temperatur gespeichert ist. Stromabwärts von der Mischeinrichtung kann ein weiterer Wärmetauscher an der Zuleitung zu der Wärmerückgewinnungseinrichtung zur weiteren Kühlung angeschlossen sein.

Die Anlage kann insbesondere dazu ausgebildet sein, die oben beschriebenen Verfahrensschritte auszuführen. Als Verarbeitungseinrichtung und Wärmerückgewinnungseinrichtung können in der Anlage die oben jeweils genannten Einrichtungen Verwendung finden.

Im Folgenden werden Ausführungsformen eines erfindungsgemäßen Verfahrens unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.
Figur 1 veranschaulicht eine Anlage in einem Sudhaus, in der Beispiele eines erfindungsgemäßen Verfahrens realisiert sind.
Figur 2 veranschaulicht die Funktionsweise eines Aufheizprozesses eines Produkts in einer Verarbeitungseinrichtung.
Figur 3 veranschaulicht die Funktionsweise eines weiteren Aufheizprozesses eines Produkts in einer Verarbeitungseinrichtung.

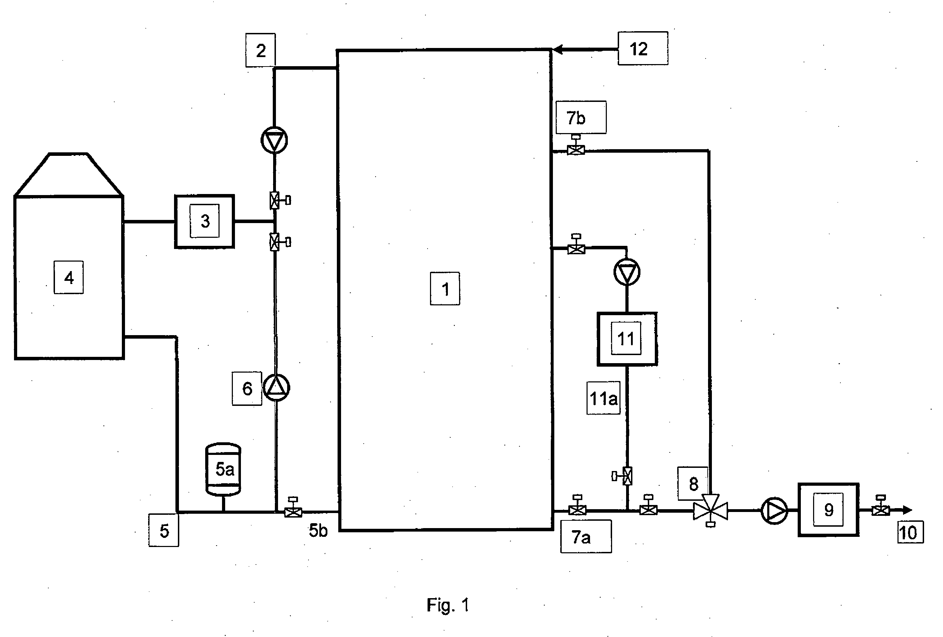

Im Folgenden werden Beispiele für ein erfindungsgemäßes Verfahren mit Bezug auf die Figuren 1 bis 3 beschrieben. In einem Energiespeichertank 1 wird ein Wärmeträgermedium verschiedener Temperaturen gespeichert. Das Wärmeträgermedium, das in dem Energiespeichertank 1 eingespeichert wird, wird vor dem Speichern durch eine Wärmerückgewinnungseinrichtung (nicht gezeigt), beispielsweise einen Würzekühler und/oder Pfannendunstkondensator und/oder Kondensatkühler, erhitzt. Hierdurch wird rekuperativ gewonnene Wärme bereitgestellt. Beispielsweise wird im oberen Bereich des Energiespeichertanks Wärmeträgermedium mit einer Temperatur von 95 °C bis 98 °C gespeichert, während in einem unteren Bereich Wärmeträgermedium mit einer Temperatur von 75 °C bis 85 °C gespeichert wird. Aus dem oberen Bereich wird Wärmeträgermedium über eine erste Vorlaufleitung 2 einem Wärmetauscher 3 zugeführt, der zur Nachheizung des Wärmeträgermediums mit einem Heizmedium betrieben werden kann, das seine Energie (Wärme) aus einer nicht-rekuperativen (beispielsweise fossilen) Energiequelle erhält. Die nicht-rekuperative Energiequelle ist insbesondere nicht ein Würzekühler oder Pfannendunstkondensator oder Kondensatkühler, sondern ist im Allgemeinen eine, sich typischerweise außerhalb eines Sudhauses befindliche, Einrichtung zum Verbrennen oder Vergasen oder zur Pyrolyse oder Katalyse/Elektrolyse eines Brennstoffes, oder eine Solarthermie- oder Geothermieanlage. Das Wärmeträgermedium wird von dem Wärmetauscher 3 einer Verarbeitungseinrichtung 4 zugeführt. Die Verarbeitungseinrichtung 4 kann beispielsweise eine Maischeinrichtung oder eine Einrichtung zum Würzekochen oder Würzeheißhalten sein. Es versteht sich, dass auch mehrere Verarbeitungseinrichtungen 4 von dem Energiespeichertank 1 mit Wärmeträgermedium versorgt werden können. Auch wenn nicht dargestellt, kann sich der Wärmetauscher 3 auch in anderen Leitungen, wie z.B. in der Zirkulationsleitung 6 vor oder hinter der Pumpe, befinden. Weiterhin kann eine Bypass-Leitung (nicht gezeigt) vorgesehen werden, über die zumindest ein Teil des Wärmeträgermediums von dem Energiespeichertank 1 an dem Wärmetauscher 3 vorbei der Verarbeitungseinrichtung 4 zugeführt werden kann.

Das Wärmeträgermedium führt der Verarbeitungseinrichtung 4 Wärme zu, die an ein in der Verarbeitungseinrichtung 4 zu erhitzendes Produkt, beispielsweise mithilfe einer oder mehrerer Kontaktflächen mit Unebenheiten an einer mit dem Produkt im Kontakt stehenden Fläche, abgegeben wird. Beispielsweise durchläuft das Wärmeträgermedium eine in der Verarbeitungseinrichtung 4 integrierte Pillow Plate Heizfläche.

Nach dem Wärmeübertrag wird das Wärmeträgermedium über die Rücklaufleitung 5 geleitet. Über diese Rücklaufleitung 5 kann es prinzipiell in den Energiespeichertank 1 zurückgeführt oder über eine Zirkulationsleitung mit einer Fördereinrichtung (z.B. eine Pumpe) zum Mischen mit von dem Energiespeichertank 1 stammenden und dem Wärmetauscher 3 über die Vorlaufleitung 2 zugeführten Wärmeträgermedium geführt werden.

Um auf Volumenänderungen aufgrund der sich ändernden Temperatur des Wärmeträgermediums, besonders beim Betrieb des Heizkreislaufes ohne Rückführung des Wärmeträgers in den Energiespeichertank 1, reagieren zu können, kann es vorteilhaft sein, ein oder mehrere Ausgleichsgefäß(e) 5a an verschiedenen Stellen in den Kreislauf zu integrieren. Für die Lösung dieses Problems ist es auch denkbar, Mischventile, Eckventile oder Überströmventile vorzusehen. Anstelle von Ventilen können auch Klappen/Regelklappen eingesetzt werden wobei über diese Ventile/Klappen überschüssiges Heizmedium abgeführt werden kann. Diese Lösung des Problems verursacht jedoch unter Umständen geringe Energie- und Wärmeträgermediumsverluste, weshalb die Lösung mit Ausgleichsgefäß im Allgemeinen zu bevorzugen ist. Als Ausgleichsgefäß kann auch der Energiespeichertank 1 selbst dienen, wobei dies bei der Konstruktion desselben zu berücksichtigen ist.

Beispiele für ein Verfahren zur mehrstufigen Wärmezufuhr zu der Verarbeitungseinrichtung 4 sind in den Figuren 2 und 3 veranschaulicht. Es wird eine gleichmäßig ansteigende Produkttemperatur des in der Verarbeitungseinrichtung 4 zu erhitzenden Produkts und somit eine konstante Heizrate des Produkts angestrebt. Die obere ansteigende Linie in den Figuren 2 und 3 veranschaulicht eine konstant bleibende Temperaturdifferenz als treibende Kraft (vgl. WO 2012/045395). Eine konstante Heizrate kann beispielsweise im Bereich von 0,05 bis 3,5 K/Min liegen. In dem in Figur 2 gezeigten Beispiel kann eine konstante Heizrate im Bereich I von Punkt 1 bis Punkt 2 allein durch rekuperative Energie (Wärme), die aus dem Wärmeträgermedium des Energiespeichertanks 1 geliefert wird, gehalten werden. Das heißt, in der Phase I wird der Wärmetauscher 3 nicht betrieben, und das Wärmeträgermedium durchströmt den nicht betriebenen Wärmetauscher 3 und überträgt seine Wärme an der Verarbeitungseinrichtung 4 auf das darin zu erhitzende Produkt. Bis zum Punkt 2 ist also die Temperatur des aus dem oberen Bereich des Energiespeichertanks 1 stammenden Wärmeträgermediums hoch genug, um eine konstante Heizrate des Produkts in der Verarbeitungseinrichtung 4 zu gewährleisten.

Um die Aufheizrate ab dem Punkt 2 aufrecht zu erhalten, muss zusätzliche thermische Energie dem aus dem Energiespeichertank 1 stammenden Wärmeträgermedium mithilfe des Wärmetauschers 3 zugeführt werden (Bereich II). Der Wärmetauscher wird dabei beispielsweise mit nicht-rekuperativer Energie (beispielsweise thermischer Primärenergie) in Form von Dampf oder Hochdruckheißwasser (HDHW) versorgt bzw. durch eine thermische Energiequelle, deren Temperaturniveau über der maximalen Temperatur im oberen Bereich des Energiespeichertanks 1 liegt. Es sei erwähnt, dass es bei einer Druckbeaufschlagung des Energiespeichertanks 1 möglich ist, auch höhere Temperaturen, beispielsweise bis 130 °C, im oberen Bereich des Energiespeichertanks 1 zu erhalten.

In Bereich II wird zusätzliche thermische Energie in das Heizmedium eingekoppelt, um die gewünschte Aufheizrate beizubehalten. Je höher die Produkttemperatur (also beispielsweise die Temperatur von Maische oder Würze) ansteigt, desto geringer wird der Anteil der einkoppelbaren rekuperativen Energie und desto größer wird der Anteil an höherwertiger thermischer Energie, die durch den Wärmetauscher 3 in das Heizmedium eingekoppelt werden muss. Solange die Rücklauftemperatur des Wärmeträgermediums aus der Verarbeitungseinrichtung 4 in der Rücklaufleitung 5 unterhalb der oberen Temperatur in dem Energiespeichertank 1, also der Vorlauftemperatur des Energiespeichertanks 1 vor dem Wärmetauscher 3 liegt, kann ein Teil der thermischen Energie für die Verarbeitungseinrichtung 4 rekuperativ (aus dem Wärmeträgermedium des Energiespeichertanks 1) bereitgestellt werden. Spätestens ab diesem Punkt (Punkt 3) muss die Verarbeitungseinrichtung 4 dann beispielsweise rein über den Wärmetauscher 3 mit nicht-rekuperativer und somit thermisch höherwertiger Energie, (beispielsweise fossiler Energie) versorgt werden (Bereich III). Mit anderen Worten kann in diesem Fall keine rekuperativ bereitgestellte Energie mehr aus dem Energiespeichertank 1 an das zu erwärmende Produkt der Verarbeitungseinrichtung 4, also die Maische bzw. Würze, abgegeben werden. Erfindungsgemäß kann aber rekuperative Energie der Verarbeitungseinrichtung 4 bis zu einem maximalen Zeitpunkt zugeführt und nur ein kleinstmöglicher Anteil an nicht-rekuperativer thermischer Energie eingekoppelt werden.

Es kann vorgesehen sein, dass im Bereich I ein Teil des von der Verarbeitungseinrichtung 4 rückgeführten Wärmeträgermediums über die Zirkulationsleitung 6 mit Pumpe zum Mischen mit von dem Energiespeichertank 1 stammenden Wärmeträgermedium geführt wird, um so einen konstanten hohen Volumenstrom, insbesondere > 0,2 m/s, durch eine Heizeinrichtung in der Verarbeitungseinrichtung 4, beispielsweise durch eine in der Verarbeitungseinrichtung 4 integrierten Pillow Plate - Heizfläche, zu gewährleisten. Beispielsweise kann ein Pillow Plate in der Zarge oder dem Boden der Verarbeitungseinrichtung 4 integriert sein. Ein anderer Teil des von der Verarbeitungseinrichtung 4 rückgeführten Wärmeträgermediums wird wieder in den Energiespeichertank 1 eingespeist. Das von der Verarbeitungseinrichtung 4 rückgeführte Wärmeträgermedium wird im Verlauf des Bereichs I und II immer heißer. Spätestens wenn es die Temperatur des im oberen Bereich des Energiespeichertanks 1 gespeicherten Wärmeträgermediums aufweist, kann es bevorzugt werden, das von der Verarbeitungseinrichtung 4 rückgeführte Wärmeträgermedium vollständig, insbesondere mit einem konstanten hohen Volumenstrom, welcher insbesondere > 0,2 m/s ist, im Kreislauf über die Zirkulationsleitung 6 mit Pumpe zu führen, um den Energiespeichertank 1 nicht mit zusätzlicher Energie zu beladen.

Ein konstanter hoher Volumenstrom schafft dementsprechende Turbulenzen in der Heizeinrichtung, was wiederum einen hohen Wärmeübergangskoeffizienten und damit auch einen höheren Wärmedurchgangskoeffizienten ermöglicht. Hohe Wärmedurchgangskoeffizienten sind insbesondere bei Verwendung von Heizmedien mit einer niedrigen Vorlauftemperatur und damit einer niedrigen treibenden Kraft (Differenz zwischen Produkttemperatur und Heizmitteltemperatur) notwendig.

Aufgrund der zeitlich sich ändernden Temperatur des von der Verarbeitungseinrichtung 4 rückgeführten Wärmeträgermediums kann es in einem Beispiel vorgesehen sein, dieses Wärmeträgermedium mithilfe einer Schichtladelanze (vgl. WO 2011/076410) temperaturabhängig in dem Energiespeichertank 1 einzuschichten.

Bei der Verarbeitungseinrichtung 4 kann es sich um ein zylindrisches Gefäß handeln.

Gemäß einer Ausführungsform gilt das folgende:
Das Heizmedium wird zumindest abschnittsweise derart in der Heizung geführt, dass es entgegen einer an der Heizfläche erzeugten Grundströmung innerhalb des Produkts, insbesondere von oben nach unten fließt. Die Grundströmung innerhalb des Produkts wird insbesondere durch ein Rührwerk erzeugt. Durch das Vorsehen eines Rührwerks ergibt sich z. B. folgende Bewegung des Produkts. Durch den vom Rührer bedingten Auftrieb und durch den thermischen Auftrieb strebt das Produkt an der Heizfläche oder aber im Fall einer Zargenheizung, an der Innenfläche der Behälterwandung in der Grundströmung von unten nach oben. Die meisten Teilchen wandern an der Heizfläche dabei spiralförmig von einem unteren Flüssigkeitsbereich in den oberen Flüssigkeitsbereich. Vorteilhafterweise ist der Zulauf für das Heizmedium als durchgehende oder in Abschnitte unterteilte Ringleitung ausgebildet und hat mehrere oder eine durchgehende Öffnung, durch die das Heizmedium in die Heizung fließt. Auch der mindestens eine Ablauf kann entsprechend als durchgehende und/oder in Abschnitte unterteilte Ringleitung ausgebildet sein.

Dadurch, dass der Zulauf sich in einem oberen Flüssigkeitsbereich ringförmig um die Heizung bzw. Heizfläche erstreckt und sich der Ablauf wie oben beschrieben, unterhalb des Zulaufes befindet, ist eine gleichmäßige Durchströmung um den Umfang der Heizung von oben nach unten gegeben.

Somit wird das Heizmedium im Gegenstrom zur Produktgrundströmung geführt und man erreicht auch mit relativ niedrigen Temperaturdifferenzen zwischen Heizmedium und zu erhitzendem Produkt sehr hohe Wärmeströme.

Bei einem Gegenstromwärmetauscher sind höhere Wärmeströme gegenüber anderen Wärmetauscherprinzipien wie zum Beispiel einem Kreuz- oder Gleichstromwärmetauscher zu erreichen. Das wärmere (wärmeabgebende) Fluid überträgt daher beim Gegenstromwärmetauscher einen größeren Anteil seiner Wärmemenge auf das kältere (wärmeaufnehmende) Fluid als beispielsweise beim Gleichstromwärmetauscher. So hat der Gegenstromwärmetauscher die Eigenschaft, dass die Austrittstemperatur des zu beheizenden Produkts, also die Temperatur des Produkts im Bereich der Spiegeloberfläche, über der Austrittstemperatur des Heizmediums im oben beschriebenen Heizmedienablauf liegen kann.

Der Energieverlust beim Gegenstromwärmetauscher ist daher deutlich niedriger als im Falle anderer Wärmetauscherprinzipien. Als Folge dessen kann die Temperatur des Heizmediums herabgesetzt werden, was zu einer besonders schonenden Erwärmung des Produkts führt, wodurch die Produktqualität positiv beeinflusst werden kann.

In Figur 3 ist ein Beispiel für das erfindungsgemäße Verfahren gezeigt, in dem die gewünschte Heizrate von Beginn an nicht durch ausschließliche Nutzung der in dem Energiespeichertank 1 gespeicherten rekuperativ gewonnenen Energie (Wärme) erreicht werden kann. Im Gegensatz zu dem in Figur 2 gezeigten Beispiel muss bereits im Bereich I ein Teil der zum Erhitzen eines Produkts in der Verarbeitungseinrichtung 4 benötigten Energie in Form von nicht-rekuperativer Energie (beispielsweise thermischer Primärenergie) bereitgestellt werden. Der Wärmetauscher 3 arbeitet also im Gegensatz zu dem in Figur 2 gezeigten Beispiel von Beginn an mithilfe von nicht-rekuperativer Energie, beispielsweise in Form von Heißdampf oder Hochdruckheißwasser. Wiederum wird, wie in dem in Figur 2 gezeigten Beispiel, ab Punkt 3 die gesamte zum weiteren Aufheizen des Produkts in der Verarbeitungseinrichtung 4 benötigte Energie über den Wärmetauscher 3 auf das von dem Energiespeichertank 1 stammende Wärmeträgermedium und von diesem dann auf das Produkt übertragen.

Wie bereits erwähnt kann es sich bei der Verarbeitungseinrichtung 4 um ein Maischgefäß handeln. Beim Maischen, wie aus dem Stand der Technik bekannt, ist es üblich, das Produkt gemäß einem vorgegebenen Temperaturprofil zu behandeln. Es ist bekannt, dass die Maische dabei unter Einhaltung von Rasten auf bestimmte Temperaturniveaus erhitzt wird. In den Figuren 2 und 3 sind zur Vereinfachung die unterschiedlichen Rasten bei einer bestimmten Temperatur nicht dargestellt. Ebenfalls ist bekannt, dass sich bei großen Maischgefäßen bzw. Gefäßen zur Würzebehandlung das Oberflächen-Volumenverhältnis verändert, sich also die zur Verfügung stehende Oberfläche zur Beheizung des Produktes, also der Maische und/oder Würze, verringert. Nicht nur in diesem Fall kann es sein, dass eine gewünschte Aufheizrate von Beginn des Verfahrens an nicht mehr rein durch rekuperative Energie aufrechterhalten werden kann. Zu diesem Zweck ist es dann natürlich ebenfalls möglich, wie in Figur 3 dargestellt, ständig thermische nicht-rekuperative Energie zur Erhöhung der treibenden Kraft in die Verarbeitungseinrichtung 4 einzukoppeln.

Es ist außerdem natürlich denkbar, dass der Anteil an nicht-rekuperativer Energie zur Wärmezufuhr zu der Verarbeitungseinrichtung ständig leicht erhöht bzw. reduziert wird, die Wärmezufuhr also nicht mit gleichbleibender treibender Kraft (starr), wie es in den Figuren 2 und 3 dargestellt ist, erfolgt. In jedem Fall kann ein sehr schonendes Aufheizen von Maischen und/oder Kochmaischen und/oder Würze erreicht werden, so dass die Grenzschichttemperatur auf ein minimal mögliches Niveau eingestellt werden kann, da das Produkt nicht mit Heißdampf oder ähnlichem geheizt wird, sondern Primärenergie nur indirekt über eine Aufheizung des vom Energiespeichertank 1 stammenden Wärmeträgermediums zur Wärmezufuhr zur Verarbeitungseinrichtung 4 verwendet wird. Insbesondere unter Verwendung von Pillow Plates kann ein hoher Wärmedurchgang mit über 1600 W/(m²·K), insbesondere über 1900 W/(m²·K) erreicht werden. So wird im Fall einer Maischeinrichtung als Verarbeitungseinrichtung 4 eine in wirtschaftlicher und technologischer Hinsicht vorteilhafte kurze Maischzeit ermöglicht.

Der in der Figur 1 gezeigte Energiespeichertank 1 wird von einer (nicht gezeigten) Wärmerückgewinnungseinrichtung über eine Rückleitung 12 mit rekuperativ gewonnener Wärmeenergie versorgt. Prinzipiell kann die Rückleitung 12 in die Vorlaufleitung 2 münden. Die Wärmerückgewinnungseinrichtung kann ein Würzekühler, ein Pfannendunstkondensator oder ein Kondensatkühler sein. Es versteht sich, dass auch mehrere Wärmerückgewinnungseinrichtungen den Energiespeichertank 1 mit Wärmeenergie versorgen können.

Im Weiteren wird beispielhaft angenommen, dass die Wärmerückgewinnungseinrichtung ein Würzekühler ist. Das beim Kühlen der Würze im Würzekühler erwärmte Wärmeträgermedium wird dem Energiespeichertank 1 über die Rückleitung 12 zugeführt. Das zum Kühlen im Würzekühler verwendete Wärmeträgermedium wird aus dem Energiespeichertank 1 über eine Zuleitung 10 mit einer Fördereinrichtung geliefert.

In dem in Figur 1 gezeigten Beispiel kann die Temperatur des Wärmeträgermediums in der Zuleitung 10 zum Würzekühler nach Bedarf genau eingestellt werden. Über eine Zuleitung 7a wird kaltes Wärmeträgermedium aus dem unteren Bereich des Energiespeichertanks 1 geliefert, und über eine weitere Zuleitung 7b wird warmes Wärmeträgermedium aus dem oberen Bereich des Energiespeichertanks 1 geliefert. Das über die Zuleitung 7a gelieferte Wärmeträgermedium und das über die Zuleitung 7b gelieferte Wärmeträgermedium werden in einer Mischeinrichtung 8 gezielt auf eine definierte/vorbestimmte Temperatur gemischt, wobei der dafür nötige Temperaturfühler nicht dargestellt ist. In einer Umpumpleitung 11a (mit einer Fördereinrichtung), die in einer bestimmten Höhe am Energiespeichertank 1 angeschlossen ist und die somit ein gewisses Energiespeichervolumen abdeckt, ist ein Wärmetauscher 11 vorgesehen, in dem, beispielsweise mithilfe kalten Brauwassers, Wärmeträgermedium aus einem Bereich oberhalb des Anschlusses der Zuleitung 7a des Energiespeichertanks 1 gekühlt werden kann. Das in dem Wärmetauscher 11 gekühlte Wärmeträgermedium des Energiespeichertanks 1 wird der Zuleitung 7a zugeführt und mischt sich dort mit dem aus dem unteren Bereich des Energiespeichertanks 1 stammenden Wärmeträgermedium. Auch wenn der Wärmetauscher 11 in Figur 1 außerhalb des Energiespeichertanks 1 gezeigt ist, so kann er doch alternativ innerhalb desselben installiert sein. Es kann vorgesehen sein, dass das den Wärmetauscher 11 verlassende gekühlte Wärmeträgermedium teilweise oder vollständig in den Energiespeichertank 1 zurückgeführt wird. Insbesondere kann der Wärmetauscher 11 in dem Energiespeichertank 1 integriert sein und kontinuierlich das Wärmeträgermedium in dem Energiespeichertank 1 kühlen, ohne dass es von dem Wärmetauscher 11 aus nach außerhalb des Energiespeichertanks 1 geleitet wird. Außerdem kann sich der Wärmetauscher 11 auch z.B. im Leitungsabschnitt 5b befinden und darüber hinaus optional mit einer weiteren Vorlaufleitung mit dem Energiespeichertank 1 verbunden sein (hier nicht dargestellt).

Zudem kann ein weiterer Wärmetauscher 9 stromabwärts der Mischeinrichtung 8 vorgesehen sein, mithilfe dessen das in der Mischeinrichtung 8 gemischte Wasser gekühlt werden kann. Mit der Mischeinrichtung 8 und/oder dem Wärmetauscher 9, kann somit eine gezielte Wärmeträgertemperatur eingestellt werden. Hiermit kann die für einen ausgeglichenen Energiehaushalt benötigte Energiemenge gezielt am Würzekühler (oder einer anderen Wärmerückgewinnungseinrichtung) abgeholt werden. In den Wärmetauschern 9 und 11 kann ein Wärmeträgermedium mit einer bestimmten Temperatur erzeugt werden, dass seiner vorbestimmten Verwendung zugeführt werden kann. Der Wärmetauscher 9 kann zusätzlich zu dem Wärmetauscher 11 oder auch ohne den Wärmetauscher 11 vorgesehen werden.

Prinzipiell ist es möglich, dass aufgrund einer relativ hohen Temperatur des Wärmeträgermediums in der mit der Verarbeitungseinrichtung 4 verbundenen Rücklaufleitung 5 der Figur 1 der Energiespeichertank 1 in unerwünschter Weise mit Energie (Wärme) aufgeladen wird. Mithilfe des Wärmetauschers 11 kann dem Energiespeichertank 1 Energie (Wärme) wieder entzogen werden. Es kann somit eine gesamte ausgeglichene Wärmeschaukel von der Wärmerückgewinnungseinrichtung (beispielsweise von einem Würzekühler), über den Energiespeichertank 1 zu der Verarbeitungseinrichtung 4 (beispielsweise zu einem Maischgefäß), maßgeblich gesteuert/geregelt einerseits durch den Energiebedarf der Verarbeitungseinrichtung 4 und andererseits durch das Mischen des Wärmeträgermediums aus den mit dem Energiespeichertank 1 verbundenen Zuleitungen 7a und 7b in der Mischeinrichtung 8, etabliert werden.

Aus der obigen Beschreibung wird deutlich, dass Figur 1 zum einen ein Beispiel für ein erfindungsgemäßes Verfahren zur mehrstufigen Wärmezufuhr zu zumindest einer Verarbeitungseinrichtung in einer Anlage zur Bierherstellung, beispielsweise in einem Sudhaus, und zum anderen ein Beispiel für ein erfindungsgemäßes Verfahren zur Regelung oder Steuerung des Energiehaushalts eines Energiespeichertanks in einer Anlage zur Bierherstellung, beispielsweise in einem Sudhaus, veranschaulicht.

## Patentansprüche

1. Verfahren zur mehrstufigen Wärmezufuhr zu zumindest einer Verarbeitungseinrichtung (4) in einer Anlage zur Bierherstellung, insbesondere in einem Sudhaus, die Schritte umfassend
Speichern von Wärmeträgermedium in einem Energiespeichertank (1), das vor dem Speichern durch eine Wärmerückgewinnungseinrichtung erhitzt wird;
in einer ersten Phase Zuführen von Wärme zu der zumindest einen Verarbeitungseinrichtung (4) hauptsächlich durch Zufuhr des Wärmeträgermediums aus dem Energiespeichertank (1) zu der zumindest einen Verarbeitungseinrichtung (4); und nachfolgend
in einer zweiten Phase Zuführen einer zeitlich anwachsenden Wärmemenge von Wärme nicht-rekuperativen Ursprungs zu dem der zumindest einen Verarbeitungseinrichtung (4) zugeführten Wärmeträgermediums und somit zu der zumindest einen Verarbeitungseinrichtung (4).

2. Verfahren gemäß Anspruch 1, mit nachfolgend in einer dritten Phase Zuführen von Wärme hauptsächlich nicht-rekuperativen Ursprungs zu der zumindest einen Verarbeitungseinrichtung (4).

3. Verfahren gemäß einem der vorhergehenden Ansprüche, in dem eine Heizrate an der Verarbeitungseinrichtung (4) im Wesentlichen konstant gehalten wird.

4. Verfahren gemäß einem der vorhergehenden Ansprüche, in dem die Wärme nicht-rekuperativen Ursprungs dem, der zumindest einen Verarbeitungseinrichtung (4) zugeführten, Wärmeträgermedium mithilfe eines ersten Wärmetauschers (3) zugeführt wird.

5. Verfahren gemäß einem der vorhergehenden Ansprüche, in dem durch die der Verarbeitungseinrichtung (4) zugeführte Wärme eine Aufheizung eines Produkts in der Verarbeitungseinrichtung (4) über eine Kontaktfläche mit Unebenheiten an einer mit dem Produkt im Kontakt stehenden Fläche, insbesondere über ein Pillow Plate, erfolgt.

6. Verfahren gemäß einem der vorhergehenden Ansprüche, in dem durch die der Verarbeitungseinrichtung (4) zugeführte Wärme eine Aufheizung eines Produkts in der Verarbeitungseinrichtung (4) auf über 74 °C erfolgt.

7. Verfahren gemäß einem der vorhergehenden Ansprüche, in dem in der ersten und der zweiten Phase ein Teil des Wärmeträgermediums, nachdem es Wärme an die Verarbeitungseinrichtung (4) abgegeben hat, direkt durch die Wärme nicht-rekuperativen Ursprungs, insbesondere durch einen Wärmetauscher, erhitzt wird und der Verarbeitungseinrichtung (4) wieder zugeführt wird, ohne dass dieser Teil wieder in den Energiespeichertank (1) gefördert wird.

8. Verfahren gemäß einem der Ansprüche 1 bis 6, in dem in der ersten und der zweiten Phase ein Teil des Wärmeträgermediums, nachdem es Wärme an die Verarbeitungseinrichtung (4) abgegeben hat, der Verarbeitungseinrichtung (4) wieder zugeführt wird, ohne dass dieser Teil wieder in den Energiespeichertank (1) gefördert wird.

9. Verfahren gemäß einem der vorhergehenden Ansprüche, in dem in der dritten Phase das Wärmeträgermedium zumindest größtenteils, nachdem es Wärme an die Verarbeitungseinrichtung (4) abgegeben hat, direkt durch die Wärme nicht-rekuperativen Ursprungs erhitzt wird und der Verarbeitungseinrichtung (4) zugeführt wird, ohne dass es wieder in den Energiespeichertank (1) gefördert wird.

10. Verfahren gemäß einem der vorhergehenden Ansprüche, in dem Wärmeträgermedium, nachdem es Wärme an die Verarbeitungseinrichtung (4) abgegeben hat, temperaturabhängig in unterschiedlichen Höhen in den Energiespeichertank (1) eingeschichtet wird.

11. Verfahren gemäß einem der vorhergehenden Ansprüche, weiterhin mit
Mischen von einem Wärmeträgermedium des Energiespeichertanks (1) mit einer ersten Temperatur und einem Wärmeträgermedium des Energiespeichertanks (1) mit einer zweiten Temperatur, die kleiner als die erste Temperatur ist, um ein gemischtes Wärmeträgermedium mit einer Temperatur zu erhalten;
Zuführen des gemischten Wärmeträgermediums mit der Temperatur zu der Wärmerückgewinnungseinrichtung;
Kühlen eines Produktes in der Wärmerückgewinnungseinrichtung mithilfe des zugeführten gemischten Wärmeträgermedium, und
Rückführen des beim Kühlen des Produktes in der Wärmerückgewinnungseinrichtung erhitzten Wärmeträgermediums zu dem Energiespeichertank (1).

12. Verfahren gemäß Anspruch 11, in dem das Wärmeträgermedium des Energiespeichertanks (1) aus dem ersten Bereich vor dem Mischen mit dem Wärmeträgermedium des Energiespeichertanks (1) aus dem zweiten Bereich in einem zweiten Wärmetauscher (11) gekühlt wird.

13. Verfahren gemäß Anspruch 11 oder 12, in dem zu dem gemischten Wärmeträgermedium vor dem Zuführen zu der Wärmerückgewinnungseinrichtung Wärmeträgermedium aus einem dritten Bereich des Energiespeichertanks (1) mit einer dritten Temperatur, die größer als die erste Temperatur ist, zugemischt wird.

14. Verfahren gemäß Anspruch 11, 12 oder 13, in dem das gemischte Wärmeträgermedium vor dem Zuführen zu der Wärmerückgewinnungseinrichtung in einem dritten Wärmetauscher (9) gekühlt wird.

15. Verfahren gemäß Anspruch 11, in dem das Wärmeträgermedium des Energiespeichertanks (1) durch einen Wärmetauscher (11) gekühlt wird.

16. Verfahren gemäß einem der vorhergehenden Ansprüche, in dem die Wärmerückgewinnungseinrichtung ein Würzekühler ist und die gesamte am Würzekühler durch Kühlung von Würze in dem gekühlten gemischten Wärmeträgermedium aufgenommene Wärme in den Energiespeichertank (1) transportiert wird.

17. Verfahren gemäß einem der vorhergehenden Ansprüche, in dem die Verarbeitungseinrichtung (4) eine Maischeinrichtung, insbesondere ein Maischgefäß, beispielsweise ein Maischebottich oder eine Maischepfanne, oder eine Einrichtung zum Kochen oder Heißhalten von Würze ist.

18. Anlage zur Bierherstellung, mit
einem Energiespeichertank (1) zum Speichern von einem Wärmeträgermedium mit verschiedenen Temperaturen in verschiedenen Bereichen des Energiespeichertanks (1);
mindestens einer Verarbeitungseinrichtung (4);
mindestens einer Wärmerückgewinnungseinrichtung;
wobei
ein erster Bereich des Energiespeichertanks (1) über eine erste Vorlaufleitung (2) mit einem ersten Wärmetauscher (3) verbunden ist, der Wärmetauscher (3) über eine zweite Vorlaufleitung mit der Verarbeitungseinrichtung (4) verbunden ist, die Verarbeitungseinrichtung (4) über eine erste Rücklaufleitung (5) mit einem zweiten Bereich des Energiespeichertanks (1) verbunden ist, der Energiespeichertank (1) über eine dritte Zuleitung (10) mit der Wärmerückgewinnungseinrichtung verbunden ist und die Wärmerückgewinnungseinrichtung über eine Rückleitung (12) mit dem Energiespeichertank (1) verbunden ist und weiterhin mit einem zweiten Wärmetauscher (11), mit dem eine vierte Wärmetauschervorlaufleitung verbunden ist, die mit einem dritten Bereich des Energiespeichertanks (1) verbunden ist, in dem Wärmeträgermedium mit einer ersten Temperatur gespeichert ist, und wobei der zweite Wärmetauscher (11) eine Wärmetauscherrücklaufleitung aufweist, die mit einem vierten Bereich des Energiespeichertanks (1) verbunden ist, in dem Wärmeträgermedium mit einer zweiten Temperatur, die kleiner als die erste Temperatur ist, gespeichert ist, und wobei der zweite Wärmetauscher (11) dazu ausgebildet ist, Wärmeträgermedium aus dem ersten Bereich des Energiespeichertanks (1) zu kühlen.

## Claims

1. A method for a multi-step supply of heat to at least one processing device (4) in a plant for producing beer, in particular in a brewhouse, comprising the steps of:
storing in an energy storage tank (1) a heat transfer medium, which is heated by a heat recovery device before it is stored;
in a first phase, supplying heat to the at least one processing device (4) mainly by supplying the heat transfer medium from the energy storage tank (1) to the at least one processing device (4); and, subsequently,
in a second phase, supplying a heat amount, which increases over time, of heat of non-recuperative origin to the heat transfer medium supplied to the at least one processing device (4), and thus to the at least one processing device (4).

2. The method according to claim 1, wherein, subsequently, heat of mainly non-recuperative origin is supplied in a third phase, to the at least one processing device (4).

3. The method according to one of the preceding claims, wherein a heating rate at the processing device (4) is kept substantially constant.

4. The method according to one of the preceding claims, wherein, with the aid of a first heat exchanger (3), the heat of non-recuperative origin is supplied to the heat transfer medium, which is fed to the at least one processing device (4).

5. The method according to one of the preceding claims, wherein, by means of the heat supplied to the processing device (4), a product within the processing device (4) is heated via a contact surface with irregularities on an area contacting said product, in particular via a pillow plate.

6. The method according to one of the preceding claims, wherein, due to the heat supplied to the processing device (4), the product within the processing device (4) is heated to a temperature above 74°C.

7. The method according to one of the preceding claims, wherein, in the first and in the second phase, a part of the heat transfer medium is, after having transferred heat to the processing device (4), heated directly through the heat of non-recuperative origin, especially through a heat exchanger, and resupplied to the processing device (4), without said part being fed back into the energy storage tank (1).

8. The method according to one of the claims 1 to 6, wherein, in the first and in the second phase, a part of the heat transfer medium is, after having transferred heat to the processing device (4), resupplied to the processing device (4), without said part being fed back into the energy storage tank (1).

9. The method according to one of the preceding claims, wherein, in the third phase, at least most of the heat transfer medium, is, after having transferred heat to the processing device (4), heated directly through the heat of non-recuperative origin and supplied to the processing device (4) without being fed back into the energy storage tank (1).

10. The method according to one of the preceding claims, wherein, after having transferred heat to the processing device (4), heat transfer medium is introduced in layers into the energy storage tank (1) on different levels and in a temperature-dependent manner.

11. The method according to one of the preceding claims, further comprising the steps of
mixing a heat transfer medium of the energy storage tank (1) with a first temperature and a heat transfer medium of the energy storage tank (1) with a second temperature, which is lower than said first temperature, so as to obtain a mixed heat transfer medium having a certain temperature;
supplying the mixed heat transfer medium having said certain temperature to the heat recovery device;
cooling a product in said heat recovery device with the aid of the mixed heat transfer medium supplied, and
feeding the heat transfer medium, which has been heated during cooling of the product in the heat recovery device, back to the energy storage tank (1).

12. The method according to claim 11, wherein the heat transfer medium of the energy storage tank (1) from the first area is cooled in a second heat exchanger (11) before it is mixed with the heat transfer medium of the energy storage tank (1) from the second area.

13. The method according to claim 11 or 12, wherein the mixed heat transfer medium has admixed thereto, before it is supplied to the heat recovery device, heat transfer medium from a third area of the energy storage tank (1) with a third temperature, which is higher than the first temperature.

14. The method according to claim 11, 12 or 13, wherein the mixed heat transfer medium is cooled in a third heat exchanger (9) before it is supplied to the heat recovery device.

15. The method according to claim 11, wherein the heat transfer medium of the energy storage tank (1) is cooled by a heat exchanger (11).

16. The method according to one of the preceding claims, wherein the heat recovery device is a wort cooler and the entire heat absorbed at the wort cooler through cooling of the wort in the cooled mixed heat transfer medium is conveyed into the energy storage tank (1).

17. The method according to one of the preceding claims, wherein the processing device (4) is a mashing unit, in particular a mashing vessel, e.g. a mash tun or a mash pan, or a unit for boiling wort or for keeping it hot.

18. A plant for producing beer, comprising
an energy storage tank (1) for storing a heat transfer medium with different temperatures in different areas of the energy storage tank (1);
at least one processing device (4);
at least one heat recovery device;
wherein
a first area of the energy storage tank (1) is connected to a first heat exchanger (3) via a first supply line (2), the heat exchanger (3) is connected to the processing device (4) via a second supply line, the processing device (4) is connected to a second area of the energy storage tank (1) via a first return line (5), the energy storage tank (1) is connected to the heat recovery device via a third feed line (10), and the heat recovery device is connected to the energy storage tank (1) via a return line (12), and further comprising a second heat exchanger (11) having connected thereto a fourth heat exchanger supply line, which is connected to a third area of the energy storage tank (1), in which heat transfer medium having a first temperature is stored, and wherein said second heat exchanger (11) comprises a heat exchanger return line, which is connected to a fourth area of the energy storage tank (1) having stored therein heat transfer medium having a second temperature that is lower than said first temperature, and wherein said second heat exchanger (11) is configured for cooling heat transfer medium from the first area of the energy storage tank (1).

## Revendications

1. Procédé pour l'amenée de chaleur, à plusieurs stades, à au moins un dispositif de traitement (4) dans une installation de production de bière, notamment dans une salle de brassage, comprenant les étapes suivantes :
stockage ou accumulation dans un réservoir de stockage d'énergie (1), de fluide caloporteur, qui est échauffé avant le stockage par un dispositif de récupération de chaleur ;
lors d'une première phase, amenée de chaleur au dit au moins un dispositif de traitement (4) essentiellement par l'amenée du fluide caloporteur en provenance du réservoir de stockage d'énergie (1) au dit au moins un dispositif de traitement (4) ; et ensuite
lors d'une deuxième phase, amenée d'une quantité de chaleur croissante dans le temps, de chaleur d'origine non récupérative, au fluide caloporteur ayant été amené au dit au moins un dispositif de traitement (4), et ainsi au dit au moins un dispositif de traitement (4).

2. Procédé selon la revendication 1, comprenant ensuite, lors d'une troisième phase, l'amenée de chaleur essentiellement d'origine non récupérative au dit au moins un dispositif de traitement (4).

3. Procédé selon l'une des revendications précédentes, d'après lequel un taux de chauffage est maintenu sensiblement constant au niveau du dispositif de traitement (4).

4. Procédé selon l'une des revendications précédentes, d'après lequel la chaleur d'origine non récupérative est amenée au fluide caloporteur ayant été amené au dit au moins un dispositif de traitement (4), à l'aide d'un premier échangeur de chaleur (3).

5. Procédé selon l'une des revendications précédentes, d'après lequel sous l'effet de la chaleur amenée au dispositif de traitement (4), il se produit un échauffement d'un produit dans le dispositif de traitement (4), par l'intermédiaire d'une surface de contact avec des irrégularités de surface au niveau d'une surface en contact avec le produit, notamment par l'intermédiaire d'une plaque thermique dite pillow-plate.

6. Procédé selon l'une des revendications précédentes, d'après lequel sous l'effet de la chaleur amenée au dispositif de traitement (4), il se produit un échauffement d'un produit dans le dispositif de traitement (4), à plus de 74°C.

7. Procédé selon l'une des revendications précédentes, d'après lequel lors de la première et de la deuxième phase, une partie du fluide caloporteur, après avoir délivré de la chaleur au dispositif de traitement (4), est échauffée directement par la chaleur d'origine non récupérative, notamment par l'intermédiaire d'un échangeur de chaleur, et est à nouveau amenée au dispositif de traitement (4), sans que cette partie soit à nouveau transportée dans le réservoir de stockage d'énergie (1).

8. Procédé selon l'une des revendications 1 à 6, d'après lequel lors de la première et de la deuxième phase, une partie du fluide caloporteur, après avoir délivré de la chaleur au dispositif de traitement (4), est à nouveau amenée au dispositif de traitement (4), sans que cette partie soit à nouveau transportée dans le réservoir de stockage d'énergie (1).

9. Procédé selon l'une des revendications précédentes, d'après lequel lors de la troisième phase, le fluide caloporteur, au moins pour la plus grande part, après avoir délivré de la chaleur au dispositif de traitement (4), est échauffé directement par la chaleur d'origine non récupérative, et est amené au dispositif de traitement (4), sans être à nouveau transporté dans le réservoir de stockage d'énergie (1).

10. Procédé selon l'une des revendications précédentes, d'après lequel du fluide caloporteur, après avoir délivré de la chaleur au dispositif de traitement (4), est introduit, en fonction de la température, à des niveaux différents ou hauteurs différentes dans le réservoir de stockage d'énergie (1).

11. Procédé selon l'une des revendications précédentes, comprenant par ailleurs
le mélange d'un fluide caloporteur du réservoir de stockage d'énergie (1) à une première température et d'un fluide caloporteur du réservoir de stockage d'énergie (1) à une deuxième température, qui est inférieure à ladite première température, pour obtenir une fluide caloporteur mélangé à une certaine température ;
l'amenée du fluide caloporteur mélangé à ladite température, au dispositif de récupération de chaleur ; le refroidissement d'un produit dans le dispositif de récupération de chaleur à l'aide du fluide caloporteur mélangé ayant été amené, et
le retour du fluide caloporteur échauffé lors du refroidissement du produit dans le dispositif de récupération de chaleur, au réservoir de stockage d'énergie (1).

12. Procédé selon la revendication 11, d'après lequel le fluide caloporteur du réservoir de stockage d'énergie (1) de la première zone, avant le mélange avec le fluide caloporteur du réservoir de stockage d'énergie (1) de la deuxième zone, est refroidi dans un deuxième échangeur de chaleur (11).

13. Procédé selon la revendication 11 ou la revendication 12, d'après lequel on additionne au dit fluide caloporteur mélangé, avant l'amenée au dispositif de récupération de chaleur, du fluide caloporteur en provenance d'une troisième zone du réservoir de stockage d'énergie (1) avec une troisième température, qui est supérieure à la première température.

14. Procédé selon la revendication 11, 12 ou la revendication 13, d'après lequel le fluide caloporteur mélangé, avant d'être amené au dispositif de récupération de chaleur, est refroidi dans un troisième échangeur de chaleur (9).

15. Procédé selon la revendication 11, d'après lequel le fluide caloporteur du réservoir de stockage d'énergie (1) est refroidi par un échangeur de chaleur (11).

16. Procédé selon l'une des revendications précédentes, d'après lequel le dispositif de récupération de chaleur est un refroidisseur de moût, et la totalité de la chaleur captée au niveau du refroidisseur de moût, par le fluide caloporteur mélangé refroidi, moyennant refroidissement du moût, est transportée dans le réservoir de stockage d'énergie (1).

17. Procédé selon l'une des revendications précédentes, d'après lequel le dispositif de traitement (4) est un dispositif à maische, notamment un réservoir à maische, par exemple une cuve à maische ou un brassin à maische, ou un dispositif pour la cuisson ou le maintien au chaud de moût.

18. Installation pour la production de bière, comprenant
un réservoir de stockage d'énergie (1) pour stocker ou accumuler un fluide caloporteur avec différentes températures dans différentes zones du réservoir de stockage d'énergie (1) ;
au moins un dispositif de traitement (4) ;
au moins un dispositif de récupération de chaleur ; installation
dans laquelle une première zone du réservoir de stockage d'énergie (1) est reliée par l'intermédiaire d'une première conduite d'alimentation (2) à un premier échangeur de chaleur (3), l'échangeur de chaleur (3) est relié par l'intermédiaire d'une deuxième conduite d'alimentation au dispositif de traitement (4), le dispositif de traitement (4) est relié par l'intermédiaire d'une première conduite de retour (5) à une deuxième zone du réservoir de stockage d'énergie (1), le réservoir de stockage d'énergie (1) est relié par l'intermédiaire d'une troisième conduite d'alimentation (10) au dispositif de récupération de chaleur et le dispositif de récupération de chaleur est relié par l'intermédiaire d'une conduite de retour (12) au réservoir de stockage d'énergie (1) et par ailleurs à un deuxième échangeur de chaleur (11) auquel est reliée une quatrième conduite d'alimentation d'échangeur, qui est reliée à une troisième zone du réservoir de stockage d'énergie (1), dans laquelle est stocké du fluide caloporteur à une première température,
et dans laquelle le deuxième échangeur de chaleur (11) présente une conduite de retour d'échangeur de chaleur, qui est reliée à une quatrième zone du réservoir de stockage d'énergie (1), dans laquelle est stocké du fluide caloporteur à une deuxième température, qui est inférieure à ladite première température,
et dans laquelle le deuxième échangeur de chaleur (11) est configuré pour refroidir du fluide caloporteur en provenance de la première zone du réservoir de stockage d'énergie (1).
